# EUROPEAN PATENT SPECIFICATION

(11) **EP 2 480 775 B1**
(45) Date of publication and mention of the grant of the patent: **21.02.2018**
(21) Application number: 10775881.5
(22) Date of filing: 22.09.2010
(51) Int. Cl.: F02D 41/00, F02D 41/10

(54) **METHOD OF CONTROLLING AN ENGINE DURING TRANSIENT OPERATING CONDITIONS**
VERFAHREN ZUR STEUERUNG EINES MOTORS WÄHREND VORÜBERGEHENDER BETRIEBSBEDINGUNGEN
PROCÉDÉ DE COMMANDE DE MOTEUR PENDANT DES MODES DE FONCTIONNEMENT TRANSITOIRE

(30) Priority: 22.09.2009 US 564072
(43) Date of publication of application: 01.08.2012
(73) Proprietor: Eaton Corporation, Cleveland, Ohio 44114-2584 (US)
(72) Inventor: SUHOCKI, Christopher, Marshall MI 49068 (US)
(74) Representative: Emde, Eric
(86) International application number: PCT/IB2010/002376
(87) International publication number: WO 2011/036538

(56) References cited:
- EP-A2- 1 279 813
- EP-A2- 1 489 289
- WO-A1-2006/066739
- DE-A1-102005 010 792
- US-A1- 2009 019 852

## Description

The subject invention generally relates to a method of controlling an internal combustion engine, and more specifically to a method of minimizing soot emissions from a diesel engine during operation of the diesel engine in a transient operating condition.

Internal combustion engines, and diesel engines in particular, are designed to operate efficiently with low emissions during a steady state operating condition, and tend to produce a large volume of soot emissions, i.e., smoke, during transient operating conditions of the engine. Transient operating conditions occur when the engine operates outside of the steady state operating condition, and may include, but are not limited too, initial engine start-up, accelerating from a low engine speed, a load increase on the engine while the engine maintains a constant engine speed, and an engine speed decrease while the load on the engine remains constant.

The transient operating conditions are generally associated with a lack of combustion air flowing into the engine for a given amount of fuel injected into the engine, causing a rich combustion that produces a large volume of soot emissions in the exhaust. In order to meet Federal emissions guidelines and requirements, the engine may include a particulate filter that filters the soot emissions from the exhaust. However, the particulate filters currently available must be regenerated on a regular basis to maintain proper operation. Further, reference is made to WO 2006/066 739 A1 and EP 1 489 289 A2, which are both related to a method of operating an internal combustion engine with supercharged air during a performance increase or acceleration phase. US 2009/0019852A1 discloses a supercharger selectively coupled to an engine or to a motor-generator.

In accordance with the present invention, a method of controlling an internal combustion engine as set forth in claim 1 is provided. Preferred embodiments of the invention are claimed in the dependent claims. The method includes defining a steady state operating condition of the engine; monitoring an operating parameter of the engine to determine if the engine is operating outside of the steady state operating condition in a transient operating condition; and adjusting the flow of air from the supercharger during operation of the engine in the transient operating condition. The flow of air supplied from the supercharger maintains a fuel/air mixture of the engine to within a pre-determined ratio to minimize emissions from the engine during operation of the engine in the transient operating condition. The method also includes adjusting an input to the engine after adjusting the flow of combustion air from the supercharger when the engine is operating in the transient operating condition to maintain the fuel/air mixture to within the pre-determined ratio, wherein adjusting the input to the engine is defined as adjusting a fuel flow injection timing of the engine.

A method of minimizing emissions from a diesel engine coupled to a mechanically driven supercharger controlling a flow of air to the diesel engine is also disclosed. The method includes defining a steady state operating condition of the engine; defining a transient operating condition of the engine as operation of the engine outside of the steady state operating condition; associating a range of values of an operating parameter of the engine with the steady state operating condition; measuring a value of the operating parameter during operation of the engine; comparing the measured value of the operating parameter with the associated range of values of the operating parameter to determine if the measured value of the operating parameter is in the transient operating condition; and adjusting the flow of air from the supercharger during operation of the diesel engine in the transient operating condition. The flow of air supplied from the supercharger maintains a fuel/air mixture of the diesel engine to within a pre-determined ratio to minimize emissions from the diesel engine during operation of the diesel engine in the transient operating condition.

Accordingly, the method supplies a flow of combustion air to the engine during transient operating conditions independently of a flow rate of the exhaust gas to maintain a proper fuel/air ratio by increasing the flow rate of air supplied to the engine from the supercharger prior to increasing the fuel injection rate to the engine. Maintaining the proper fuel/air ratio minimizes soot emissions during operation of the engine in the transient operating conditions. The reduced soot emissions allow the engine to operate for extended periods of time without the need to regenerate a particulate filter.

The above features and advantages and other features and advantages of the present invention are readily apparent from the following detailed description of the best modes for carrying out the invention when taken in connection with the accompanying drawings.

### BRIEF DESCRIPTION OF THE DRAWINGS

Figure 1 is a schematic cross sectional view of a first embodiment of an internal combustion engine.
Figure 2 is a schematic cross sectional view of a second embodiment of an internal combustion engine.
Figure 3 is a flow chart showing a method of controlling the internal combustion engine.

### DESCRIPTION OF THE PREFERRED EMBODIMENTS

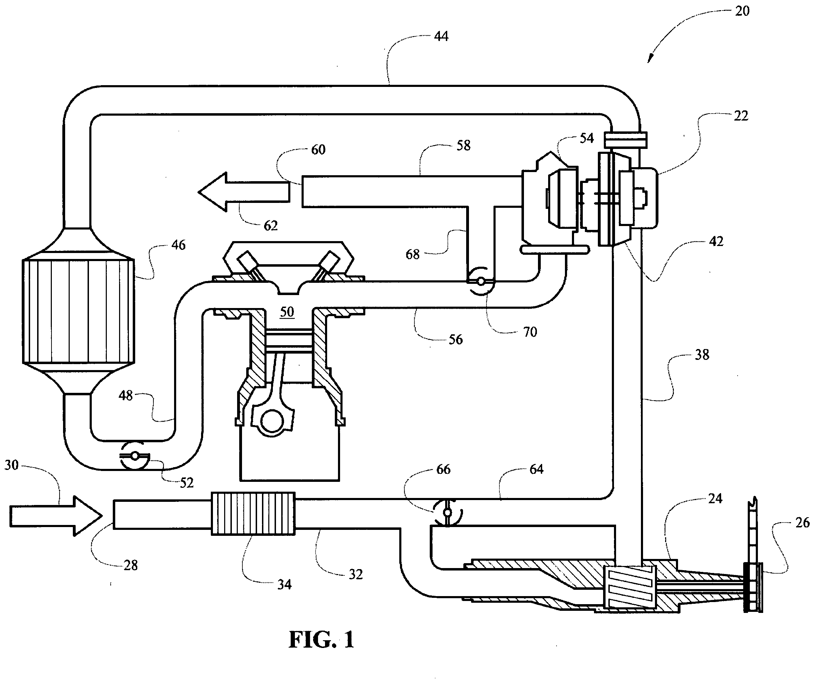

Referring to the Figures, wherein like numerals indicate corresponding parts throughout the several views, a first embodiment of an internal combustion engine is shown generally at 20 in Figure 1. The engine 20 includes a conventional engine, such as a diesel engine or a gasoline engine. As shown in Figure 1, the engine 20 is coupled to a "superturbo" boosting system, which includes both a turbocharger 22 and a supercharger 24 disposed in-line with each other to increase the boost, i.e., pressure, of combustion air of the engine 20.

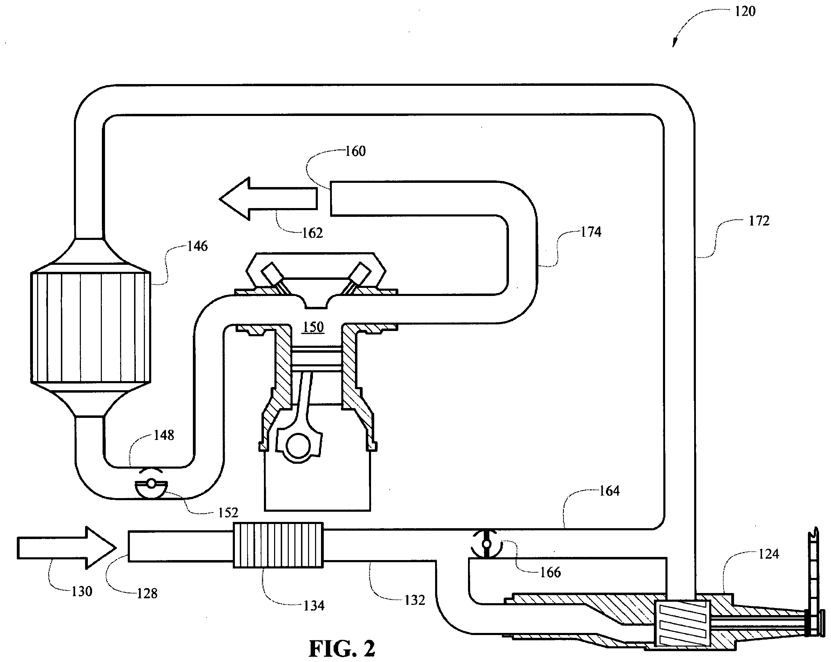

The turbocharger 22 is powered by exhaust gas provided by the engine 20 as is well known. The supercharger 24 is mechanically linked to the engine 20 and is powered by the engine 20. The supercharger 24 may include a clutch 26, as shown in Figure 1, interconnecting the engine 20 and the supercharger 24. Alternatively, as shown in Figure 2, the supercharger 124 may be directly coupled to the engine 120 for continuous operation of the supercharger 124 with the engine 120. The clutch 26 is configured for selectively engaging and disengaging the supercharger 24. It should be understood by those skilled in the art that the clutch 26 may, within the scope of the present invention, comprise any type of clutch 26 (e.g., engageable friction discs, electromagnetic, etc.) which is effective in transmitting mechanical drive from the vehicle engine 20 (typically, but not necessarily, from the crankshaft) to the input shaft of the supercharger 24. Also, as is also now well known to those skilled in the art, there may be some sort of "step-up gear" speed increasing arrangement between the clutch 26 and the input shaft, with a typical ratio for such a speed increasing arrangement being in the range of about 2:1 to about 4:1.

The boosting system includes a plurality of air ducts configured for communicating the combustion air to the engine 20. The air ducts communicate the combustion air to and from the engine 20. The air ducts include an intake 28, through which the combustion air enters the boosting system in a direction indicated by arrow 30. A first air duct 32 includes a filter 34, and is in fluid communication with an inlet of the supercharger 24. The combustion air enters the boosting system through the intake 28, and flows through the filter 34 toward the supercharger 24.

A second air duct 38 connects an outlet of the supercharger 24 with a pumping portion, i.e., a compressor 42, of the turbocharger 22. A third air duct 44 interconnects an outlet of the compressor 42 with an inlet of an intercooler 46. The function of the intercooler 46 is well known, and outside the scope of this invention. Accordingly, the function of the intercooler 46 is not described in detail herein. A fourth air duct 48 interconnects an outlet of the intercooler 46 with a combustion chamber 50 of the engine 20.

Disposed within the fourth air duct 48 is an engine throttle 52, which is shown in FIG. 1 in a fully open position. It should be appreciated that the engine throttle 52 may be controlled to be in any position between the fully open position shown in FIG. 1, and a fully closed position, which substantially blocks all air flow through the fourth air duct 48, thereby limiting air flow into the combustion chamber 50 of the engine 20.

The turbocharger 22 also includes a turbine portion 54, which is mechanically coupled to and configured to drive the compressor 42. A fifth air duct 56 interconnects the combustion chamber 50 of the engine 20 with an inlet of the turbine portion 54 of the turbocharger 22 to provide the turbine portion 54 with the exhaust gas. A sixth air duct 58 interconnects an outlet of the turbine portion 54 of the turbocharger 22 with exhaust exit 60. The exhaust gas flows out of the boosting system through the exhaust exit 60 in a direction indicated by arrow 62.

A combustion air bypass duct 64 is disposed between the first air duct 32 and the outlet of the supercharger 24. A combustion air bypass valve 66 is disposed within the combustion air bypass duct. The combustion air bypass valve 66 is normally in a closed position when the supercharger 24 is operating to direct the combustion air through the first air duct 32 to the supercharger 24. However, when reduced levels of boost are sufficient, the combustion air bypass valve 66 may be moved from the closed position of the combustion air bypass valve 66 toward an open position of the combustion air bypass valve 66 to decrease the flow of combustion air through the supercharger 24, and allow a portion of the combustion air to flow through the combustion air bypass duct 64, into the second air duct 38.

One result of moving the combustion air bypass valve 66 toward a more open position is that the boost pressure of the combustion air in the second air duct 38 lower than the normal boost pressure present when the combustion air bypass valve 66 is fully closed. As the vehicle engine 20 reaches relatively higher engine 20 speeds, the clutch 26 may be disengaged, so that the supercharger 24 is not being driven. At the same time, the turbocharger 22 is being driven by the flow of exhaust gas through the fifth air duct 56. During this mode of operation, the combustion air bypass valve 66 is in the fully opened position and should be large enough not to present any undesirable flow restriction to the combustion air, which flows from the intake 28, through the first air duct 32, through the combustion air bypass valve 66, through the combustion air bypass duct 64, through the second air duct 38 and into the compressor 42 of the turbocharger 22.

An exhaust gas bypass duct 68 interconnects the fifth air duct 56 with the sixth air duct 58. An exhaust gas bypass valve, i.e., a wastegate 70, is disposed within the exhaust gas bypass duct 68. The wastegate 70 may be made and function as is well known in the turbocharger 22 art.

While a "superturbo" system is shown in Figure 1 and described above, in which the supercharger 24 is disposed within the boosting system before the turbocharger 22, it should be appreciated that the relative positions of the supercharger 24 and the turbocharger 22 may be reversed to define a "turbosuper" boosting system, in which the turbocharger 22 is disposed in the boosting system prior to the supercharger 24.

Referring to Figure 2, a second embodiment of the engine is shown generally at 120. Features of the second embodiment of the engine 120 that are identical to the first embodiment of the engine 20 include the same reference numeral increased by one hundred. For example, the filter, which is identified in the first embodiment of the engine 20 by the reference numeral 34, is identified in the second embodiment of the engine 120 by reference numeral 134.

The second embodiment of the engine 120 is similar to the first embodiment of the engine 20 without the turbocharger 22 and associated air ducts. In other words, the boosting system of the second embodiment of the engine 120 only includes the supercharger 124, and does not include the turbocharger 22. As such, only the differences between the first embodiment of the engine 20 and the second embodiment of the engine 120 are described below. Accordingly, the features of the second embodiment of the engine 120 shown in Figure 2, including the intake 128, the arrow 130 indicating air flow into the intake 128, the fourth air duct 148, the throttle 152, the arrow 162 indicating air flow from the exhaust exit 160, and the combustion air bypass valve 166, each operate in the same manner as the corresponding features of the first embodiment of the engine 20, and are not described in detail below.

Additionally, the second embodiment of the engine 120 does not include the clutch 26 interconnecting the supercharger 124 and the engine 120. Accordingly, the supercharger 124 is directly coupled to the engine 120 for continuous operation with the engine 120.

Within the second embodiment of the engine 120, a seventh air duct 172 interconnects the outlet of the supercharger 124 and the inlet of the intercooler 146 with the combustion air bypass duct 164 interconnecting the first air duct 132 and the seventh air duct 172, and an eighth air duct 174 interconnects the engine 120 and the exhaust exit 160 to convey the exhaust gas from the combustion chamber 150 of the engine 120 directly to the exhaust exit 160.

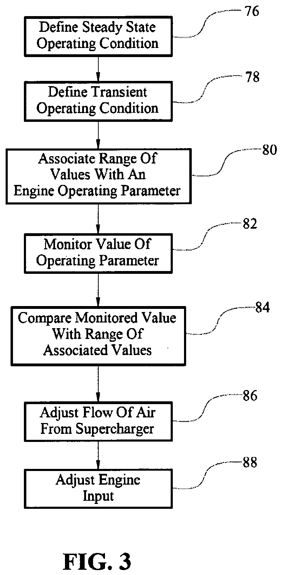

Referring to Figure 3, a method of controlling the internal combustion engine 20, 120 is shown. Preferably, the engine 20, 120 includes a diesel engine. The method includes defining a steady state operating condition of the engine 20, 120 (block 76). Defining the steady state operating condition of the engine 20, 120 may further include defining an operating range within which the engine 20, 120 operates without change over time. In other words, the steady state operating condition includes a range of operating conditions that the engine 20, 120 normally operates within at a high efficiency over time.

Defining the operating range may further include defining an engine operating speed range, such as between 500 and 7000 rpm's. However, it should be appreciated that the specific operating speed range varies with each specific engine 20, 120, and with different applications of the engine 20, 120.

The method further includes defining a transient operating condition of the engine 20, 120 (block 78. The transient operating condition of the engine 20, 120 may be defined as operation of the engine 20, 120 outside of the steady state operating condition. The transient operating condition of the engine 20, 120 corresponds to a change of one or more operating parameters of the engine 20, 120 over time. The operating parameters of the engine 20, 120 remain substantially constant while the engine 20, 120 is operating in the steady state operating condition. However, once outside of the steady state operating condition, the operating parameters of the engine 20, 120 vary over time.

The operating parameters may include one or more operating parameters of the engine 20, 120 chosen from a group of operating parameters including a fuel/air ratio, a speed of the engine 20, 120, an exhaust gas emission level of the engine 20, 120, a fuel flow injection timing of the engine 20, 120, and a flow rate of the combustion air. It should be appreciated that the operating parameters of the engine 20, 120 may include other parameters not described herein.

The method may further include associating a range of values of one or more of the operating parameters with the steady state operating condition (block 80). Accordingly, operation of the engine 20, 120 within the range of values for the operating parameter corresponds to operation of the engine 20, 120 within the steady state operating condition, whereas operation of the engine 20, 120 outside of the range of values for the operating parameter corresponds to operation of the engine 20, 120 outside of the steady state operating condition, i.e., operation in the transient operating condition.

The method may further include monitoring one or more of the operating parameters of the engine 20, 120 to determine if the engine 20, 120 is operating within the steady state operating condition, or outside of the steady state operating condition in the transient operating condition (block 82). Monitoring the operating parameter may further be defined as measuring a value of the operating parameter. Accordingly, the vehicle may include one or more sensors for sensing the value of the operating parameter.

The method may further include comparing the measured value of the operating parameter with the associated range of values of the operating parameter to determine if the measured value of the operating parameter is outside of the range of values of the operating parameter (block 84). If the measured value of the operating parameter is within the range of values associated with the steady state operating condition, then the engine 20, 120 is operating within the steady state operating condition. However, if the measured value of the operating parameter is outside the range of values associated with the steady state operating condition, then the engine 20, 120 is operating within the transient operating condition.

The method further includes adjusting the flow of air from the supercharger 24, 124 during operation of the engine 20, 120 in the transient operating condition (block 86). Adjusting the supercharger 24, 124 provides a continuous flow of air to the combustion chamber 50, 150 of the engine 20, 120 at a sufficient flow rate to maintain a proper fuel/air mixture to substantially within a pre-determined ratio. The pre-determined ratio corresponds to the efficient operation of the engine 20, 120, in which the engine 20, 120 is not operating too richly, i.e., too much fuel to the available amount of combustion air. Maintaining the fuel/air mixture to within the pre-determined ratio minimizes soot emissions from the engine 20, 120 during operation of the engine 20, 120 in the transient operating condition. Minimization of soot emissions from the engine 20, 120 increases the time between regeneration of a particulate filter (not shown) used to filter the soot from the exhaust gas, i.e., the particulate filter lasts longer when the engine 20, 120 produces less soot in the exhaust.

Adjusting the flow of air from the supercharger 24, 124 may further include adjusting the supercharger 24, 124 while the engine 20, 120 is operating in the transient operating condition to ensure proper combustion air flow to the engine 20, 120 during operation of the engine 20, 120 in the transient condition. As described above, maintaining the proper air flow to the combustion chamber 50, 150 of the engine 20, 120 ensures that the proper fuel/air ratio is maintained, which minimizes the soot emissions from the engine 20, 120, particularly in a diesel engine.

The method may further include adjusting an input to the engine 20, 120 while maintaining the flow of combustion air from the supercharger 24, 124 when the engine 20, 120 is operating in the transient operating condition, indicated at 88. Adjusting the input to the engine 20, 120 assists in maintaining the fuel/air mixture to within the pre-determined ratio. Adjusting the input to the engine 20, 120 may further be defined as adjusting a fuel flow injection timing of the engine 20, 120. Adjusting the fuel flow injection timing may be further defined as adjusting a fuel flow injection rate, i.e. the flow rate of the fuel injected into the engine. It should be appreciated that the input to the engine may include some other input not described herein.

The method may further include defining a plurality of intermediate operating conditions within each transient operating condition. In other words, each transient operating condition may be broken up into or include multiple intermediate operating conditions. If the transient operating condition is broken up to define multiple intermediate operating conditions, then adjusting the flow of air from the supercharger 24, 124 during operation of the engine 20, 120 in the transient operating condition may further be defined as adjusting the flow of air from the supercharger 24, 124 to achieve one of the plurality of intermediate operating conditions defined within the transient operating condition. Additionally, the method may further include adjusting a fuel flow injection timing, i.e., fuel flow rate, of the engine 20, 120 to achieve one of the plurality of intermediate operating conditions defined within the transient operating condition. The fuel flow injection rate is adjusted after the flow of air from the supercharger 24, 124 is adjusted to achieve one of the plurality of intermediate operating conditions defined within the transient operating condition. As such, if multiple intermediate operating conditions are defined, the flow of air is adjusted to achieve a first of the intermediate operating conditions, after which the fuel flow rate is adjusted to achieve the first of the plurality of intermediate operating conditions. After the first of the intermediate operating conditions is achieved, the flow of air from the supercharger is adjusted to meet a second of the intermediate operating conditions, after which the fuel flow rate is adjusted to achieve the second of the plurality of intermediate operating conditions. In this manner, the operation of the engine progresses through each of the intermediate operating conditions until the engine 20, 120 is operating within the steady state operating condition.

While the best modes for carrying out the invention have been described in detail, those familiar with the art to which this invention relates will recognize various alternative designs and embodiments for practicing the invention within the scope of the appended claims.

## Claims

1. A method of controlling an internal combustion engine (20) through a mechanically driven supercharger (24) coupled to a crankshaft of the engine (20) for controlling a flow of air to the engine (20), the method comprising:
defining a steady state operating condition of the engine (20);
monitoring an operating parameter of the engine (20);
detecting when the engine (20) is operating outside of the steady state operating condition in a transient operating condition;
controlling a fuel/air mixture during operation of the engine (20) in the transient operating condition by:
adjusting first a flow of air from the supercharger (24) to the engine (20) upon detection of the engine (20) in the transient operating condition while not adjusting a fuel input to the engine (20), wherein the supercharger (24) is powered by torque mechanically transferred from the crankshaft of the engine (20) and does not rely on torque generated by exhaust that has been output from the engine (20); and
adjusting second the fuel input to the engine (20) after adjusting the flow of air from the supercharger (24) to the engine (20.

2. A method as set forth in claim 1 further comprising associating a range of values of the operating parameter with the steady state operating condition.

3. A method as set forth in claim 2 wherein monitoring an operating parameter is further defined as measuring a value of the operating parameter.

4. A method as set forth in claim 3 further comprising comparing the measured value of the operating parameter with the associated range of values of the operating parameter to determine if the measured value of the operating parameter is outside of the range of values of the operating parameter associated with the steady state operating condition.

5. A method as set forth in claim 4 wherein the operating parameter includes an operating parameter of the engine (20) chosen from a group of operating parameters including a fuel/air ratio within the engine (20), a speed of the engine (20), an exhaust gas emission level of the engine (20), a fuel flow injection timing of the engine (20), and a flow rate of the combustion air.

6. A method as set forth in claim 1 wherein defining a steady state operating condition is further defined as defining an operating range within which the engine (20) operates without change over time.

7. A method as set forth in claim 6 wherein defining an operating range is further defined as defining an engine (20) operating speed range.

8. A method as set forth in claim 6 or 7 further comprising defining a transient operating condition of the engine (20) as operation of the engine (20) outside of the steady state operating condition.

9. A method as set forth in any one of the preceding claims wherein the engine (20) includes a diesel engine (20).

## Patentansprüche

1. Verfahren zur Steuerung eines Verbrennungsmotors (20) durch einen mechanisch angetriebenen Kompressor (24), der mit einer Kurbelwelle des Motors (20) gekoppelt ist, um einen Luftfluss zum Motor (20) zu steuern, wobei das Verfahren Folgendes aufweist:
Definieren eines stetigen Betriebszustandes des Motors (20);
Überwachen eines Betriebsparameters des Motors (20);
Detektieren, wann der Motor (20) außerhalb des stetigen Betriebszustandes in einem transienten Betriebszustand arbeitet;
Steuern einer Brennstoff/Luft-Mischung während des Betriebs des Motors (20) in dem transienten Betriebszustand durch:
Einstellen eines ersten Luftflusses vom Kompressor (24) zum Motor (20) auf die Detektion hin, dass der Motor (20) im transienten Betriebszustand ist, während die Brennstoffeingabe in den Motor (20) nicht eingestellt wird, wobei der Kompressor (24) durch Drehmoment angetrieben wird, welches mechanisch von der Kurbelwelle des Motors (20) übertragen wird und nicht auf Drehmoment beruht, welches durch Abgas erzeugt wird, welches aus dem Motor (20) ausgegeben worden ist; und
Einstellen an zweiter Stelle der Brennstoffeingabe in den Motor (20) nach dem Einstellen des Luftflusses von dem Kompressor (24) zum Motor (20).

2. Verfahren nach Anspruch 1, welches weiter aufweist einen Bereich von Werten der Betriebsparameter mit dem stetigen Betriebszustand zu assoziieren.

3. Verfahren nach Anspruch 2, wobei das Überwachen eines Betriebsparameters weiter definiert ist als Messen eines Wertes des Betriebsparameters.

4. Verfahren nach Anspruch 3, welches weiter aufweist, den gemessenen Wert des Betriebsparameters mit dem assoziierten Bereich von Werten des Betriebsparameters zu vergleichen, um zu bestimmen, ob der gemessene Wert des Betriebsparameters außerhalb des Bereiches von Werten des Betriebsparameters ist, der mit dem stetigen Betriebszustand assoziiert ist.

5. Verfahren nach Anspruch 4, wobei der Betriebsparameter einen Betriebsparameter des Motors (20) aufweist, der aus einer Gruppe von Betriebsparametern ausgewählt ist, die ein Brennstoff/Luft-Verhältnis in dem Motor (20), eine Drehzahl des Motors (20), ein Abgasemissionsniveau des Motors (20), einen Brennstoffflusseinspritzzeitpunkt des Motors (20) und eine Flussrate der Verbrennungsluft aufweist.

6. Verfahren nach Anspruch 1, wobei das Definieren eines stetigen Betriebszustandes weiter definiert ist als Definieren eines Betriebsbereiches innerhalb dem der Motor (20) ohne Veränderung über die Zeit arbeitet.

7. Verfahren nach Anspruch 6, wobei das Definieren eines Betriebsbereiches weiter definiert ist als Definieren eines Betriebsdrehzahlbereiches des Motors (20).

8. Verfahren nach Anspruch 6 oder 7, welches weiter aufweist, einen transienten Betriebszustand des Motors (20) als einen Betrieb des Motors (20) außerhalb des stetigen Betriebszustandes zu definieren.

9. Verfahren nach einem der vorhergehenden Ansprüche, wobei der Motor (20) einen Dieselmotor (20) aufweist.

## Revendications

1. Procédé pour contrôler un moteur à combustion interne (20) par l'intermédiaire d'un dispositif de suralimentation entraîné mécaniquement (24) couplé à un vilebrequin du moteur (20) pour contrôler un flux d'air vers le moteur (20), le procédé comprenant :
définir une condition de fonctionnement d'état stable du moteur (20) ;
surveiller un paramètre de fonctionnement du moteur (20) ;
détecter le moment où le moteur (20) fonctionne en dehors de la condition de fonctionnement d'état stable dans une condition de fonctionnement transitoire ;
contrôler un mélange de carburant/air pendant le fonctionnement du moteur (20) dans la condition de fonctionnement transitoire :
en ajustant un premier flux d'air à partir du dispositif de suralimentation (24) vers le moteur (20) lorsqu'il est détecté que le moteur (20) est dans la condition de fonctionnement transitoire sans ajuster l'entrée de carburant vers le moteur (20), le dispositif de suralimentation (24) étant entraîné par un couple transféré mécaniquement à partir du vilebrequin du moteur (20) et ne dépendant pas d'un couple généré par l'échappement qui a été produit par le moteur (20) ; et
en ajustant une deuxième entrée de carburant vers le moteur (20) après avoir ajusté le flux d'air allant du dispositif de suralimentation (24) vers le moteur (20).

2. Procédé selon la revendication 1, comprenant en outre l'association d'une plage de valeurs du paramètre de fonctionnement avec la condition de fonctionnement d'état stable.

3. Procédé selon la revendication 2, dans lequel la surveillance d'un paramètre de fonctionnement est en outre définie comme étant la mesure d'une valeur du paramètre de fonctionnement.

4. Procédé selon la revendication 3, comprenant en outre une comparaison de la valeur mesurée du paramètre de fonctionnement à la plage de valeurs associée du paramètre de fonctionnement pour déterminer si la valeur mesurée du paramètre de fonctionnement est en dehors de la plage de valeurs du paramètre de fonctionnement associée à la condition de fonctionnement d'état stable.

5. Procédé selon la revendication 4, dans lequel le paramètre de fonctionnement comprend un paramètre de fonctionnement du moteur (20) choisi parmi un groupe de paramètres de fonctionnement comprenant un rapport carburant/air dans le moteur (20), une vitesse du moteur (20), un niveau d'émission de gaz d'échappement du moteur (20), une caractéristique temporelle d'injection de flux de carburant du moteur (20), et un débit de l'air de combustion.

6. Procédé selon la revendication 1, dans lequel la définition d'une condition de fonctionnement d'état stable est en outre définie par la définition d'une plage de fonctionnement dans laquelle le moteur (20) fonctionne sans changement dans le temps.

7. Procédé selon la revendication 6, dans lequel la définition d'une plage de fonctionnement est en outre définie par la définition d'une plage de vitesses de fonctionnement du moteur (20).

8. Procédé selon les revendications 6 ou 7, comprenant en outre la définition d'une condition de fonctionnement transitoire du moteur (20) comme étant un fonctionnement du moteur (20) en dehors de la condition de fonctionnement d'état stable.

9. Procédé selon l'une quelconque des revendications précédentes, dans lequel le moteur (20) comprend un moteur diesel (20).
